# EUROPEAN PATENT SPECIFICATION

(11) **EP 1 905 209 B1**
(45) Date of publication and mention of the grant of the patent: **02.06.2010**
(21) Application number: 06764226.4
(22) Date of filing: 19.07.2006
(51) Int. Cl.: H04L 29/06

(54) **METHOD AND APPARATUS FOR ALLOCATING A SERVER IN AN IMS NETWORK**
VERFAHREN UND VORRICHTUNG ZUM ZUTEILEN EINES SERVERS IN EINEM IMS-NETZ
PROCEDE ET APPAREIL D'ATTRIBUTION D'UN SERVEUR DANS UN RESEAU IMS

(30) Priority: 15.08.2005 WO PCT/EP2005/054009; 19.07.2005 US 700683 P
(43) Date of publication of application: 02.04.2008
(73) Proprietor: Telefonaktiebolaget LM Ericsson (publ), 164 83 Stockholm (SE)
(72) Inventor: ÅSTRÖM, Bo, S-117 59 Stockholm (SE); RYDE, Anders, S-133 34 Saltsjöbaden (SE); BERG, Stefan, 53177 Bonn (DE); PRZYBYSZ, Hubert, S-126 37 Stockholm (SE); TERRILL, Stephen, E-28006 Madrid (ES); ARAUZ-ROSADO, Jesus-Javier, E-28031 Madrid (ES)
(74) Representative: Sjöberg, Mats Hakan
(86) International application number: PCT/EP2006/064426
(87) International publication number: WO 2007/010010

(56) References cited:
- WO-A-2005/064896
- 3GPP: "IP Multimedia Subsystem Sh interface; Signalling flows and message contents" 3GPP TS 29.328 V6.6.0, June 2005 (2005-06), pages 1-36, XP014031026
- "Digital cellular telecommunications system (Phase 2+); Universal Mobile Telecommunications System (UMTS); IP Multimedia Subsystem (IMS); Stage 2 (3GPP TS 23.228 version 6.9.0 Release 6); ETSI TS 123 228" ETSI STANDARDS, EUROPEAN TELECOMMUNICATIONS STANDARDS INSTITUTE, SOPHIA-ANTIPO, FR, vol. 3-SA2, no. V690, March 2005 (2005-03), XP014027532 ISSN: 0000-0001
- 3GPP: "IP Multimedia (IM) session handling; IM call model; stage 2 (release 5)" 3GPP TS 23-218 V5.8.0, [Online] March 2005 (2005-03), pages 1-56, XP002371086 Retrieved from the Internet: URL:http://www.arib.or.jp/IMT-2000/V460Nov 05/5_Appendix/Rel5/23/23218-580.pdf>

## Description

### Field of the Invention

The present invention relates to a method and apparatus for allocating a server in an IP Multimedia Subsystem network and in particular, though not necessarily, to a method and apparatus for dynamically allocating an application server to an IP Multimedia Subsystem user.

### Background to the Invention

IP Multimedia services provide a dynamic combination of voice, video, messaging, data, etc. within the same session. By growing the number of basic applications and the media which it is possible to combine, the number of services offered to the end users (e.g. subscribers) will grow, and the interpersonal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-subscriber person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between subscriber terminals (or subscriber terminals and application servers). The Session Description Protocol (SDP), carried by SIP signalling, is used to describe and negotiate the media components of the session. Whilst SIP was created as a subscriber-to-subscriber protocol, IMS allows operators and service providers to control subscriber access to services and to charge subscribers accordingly.

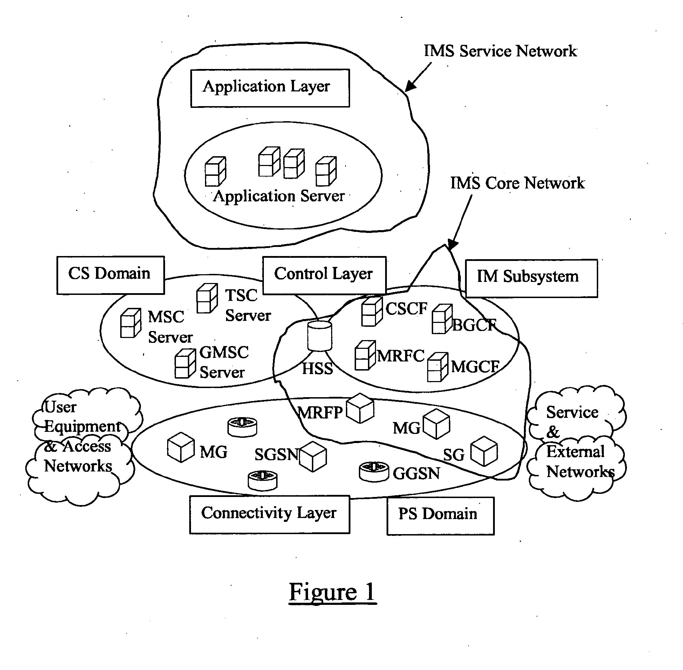

By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the subscriber that the subscriber is subscribed to; and the Interrogating CSCF (I-CSCF) whose role is to identify the correct S-CSCF and to forward to that S-CSCF a request received from a SIP terminal via a P-CSCF.

A subscriber registers with the IMS using the specified SIP REGISTER method. This is a mechanism for attaching to the IMS and announcing to the IMS the address ("contact") at which a SIP subscriber identity can be reached. In 3GPP, when a SIP terminal performs a registration, the IMS authenticates the subscriber, and allocates an S-CSCF to that subscriber from the set of available S-CSCFs. Whilst the criteria for allocating S-CSCFs is not specified by 3GPP, these may include load sharing and service requirements. It is noted that the allocation of an S-CSCF is key to controlling (and charging for) subscriber access to IMS-based services. Operators may provide a mechanism for preventing direct subscriber-to-subscriber SIP sessions which would otherwise bypass the S-CSCF.

During the registration process, it is the responsibility of the I-CSCF to select an S-CSCF if an S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a subscriber by the I-CSCF in the case where the subscriber is called by another party, and the subscriber is not currently allocated an S-CSCF.] In the case where multiple HSSs are deployed in a network, a Subscription Locator Function (SLF) is used by the I-CSCF to identify the correct HSS for a subscriber. When a registered subscriber subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-subscribers in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a subscriber's Subscriber Profile.

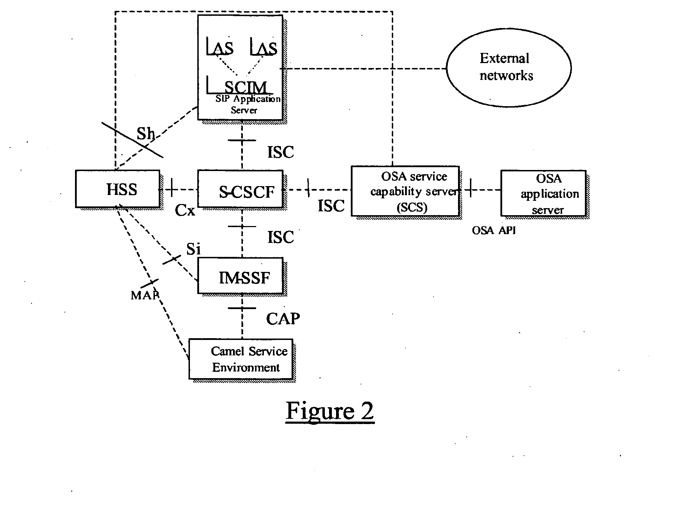

Figure 2 illustrates the IMS Service Control (ISC) interface between an AS and an S-CSCF, as well as other interfaces within the IMS. Although the AS in Figure 2 is shown as having only a single interface to an S-CSCF, it will be appreciated that in practice the ISC interface will extend across a communication network to which many (or all) of the CSCF servers of a given operator's network are connected, allowing an AS to communicate with all of these CSCFs. [Other entities illustrated in Figure 2 will be well known to those of skill in the art.]

A further interface (Ut) exists between the AS and the subscriber terminal (TS23.002) although this is not shown in the Figure. The Ut interface enables the subscriber to manage information related to his or her services, e.g. creation and assignment of Public Service Identities, management of authorisation policies that are used for example by "presence" services, conference policy management, etc.

In the IMS as defined in 3GPP, whilst subscribers are statically allocated to an HSS, it is the ASs that provide specific value in the case of services provided by the network. A reading of the 3GPP specification in Releases 5 and 6 suggests that subscribers are allocated to particular SIP ASs in a fixed manner. The basic concept is that a subscriber is provisioned to be supported by a specific SIP AS for a given service or services. In order to enable the allocated S-CSCF to reach the allocated AS over the ISC interface, the filter criteria (contained within the IFC sent to the S-CSCF from the HSS) for that subscriber for that service contain either a fully qualified domain name (FQDN) or IP address as the destination address (encoded as a SIP-URI). This implies, for example, that when the S-CSCF identifies that a particular INVITE should be routed to an AS, the S-CSCF is provided with the address of the specific AS over the Cx interface. In order to identify the correct AS for other interfaces, e.g. such as the Ut interface between the subscriber terminals and the SIP-ASs, routing proxies are provisioned with the address of the AS for the particular subscriber. Where subscribers are allocated to specific ASs, then either the terminal is configured with the address of the AS for that interface and service, or the terminal sends the request to an entity that knows how to retrieve the address of the AS for that subscriber. A "front end" could do this and, in such a case, the routing functionality would be configured into the front end.

WO2005/064896 descibes a mechanism for the dynamic allocation of Application Servers from within a server pool. Generic Application Server addresses are provisioned within the HSS and are provided to the S-CSCF at user registration.

### Summary of the Invention

As will be clear from the above discussion, the existing proposal for the allocation of ASs to subscribers requires the provisioning of a subscriber to a specific SIP application server for a given service or set of services. This requires a high level of availability and persistent storage of data on the ASs as, if a single ASs becomes temporarily unavailable or does not retain the appropriate information, the provisioned service(s) will be unavailable to the subscribers to whom the AS is allocated. Adopting this approach may require the building-in of redundancy to each AS. Furthermore, static subscriber allocation complicates the operational aspects of a network and makes actions such as re-allocation of subscribers to ASs a non-trivial task. Such re-allocation may be required for example when the number of subscribers in a network grows to a point where additional capacity (processing power, memory, etc) is required.

According to a first aspect of the present invention there is provided a method of directing requests to an application server within an IP Multimedia Subsystem, the method being characterised by the steps of:
upon receipt of a request associated with an IP Multimedia Subsystem user at an entity of the IP Multimedia Subsystem, querying a centrally maintained database to determine whether or not the user is allocated to an application server;
if it is determined that the user is not allocated to an application server, allocating the user to an application server at said entity, forwarding the request from said entity to the allocated application server, and sending a request from the application server or said entity to said centrally maintained database to cause the allocation to be recorded there; and
if it is determined that the user is allocated to an application server, forwarding the request from said entity to the allocated application server.

Embodiments of the present invention provide a means to handle the dynamic allocation of users of an IP Multimedia Subsystem to Session Initiation Protocol application servers (SIP-ASs). The advantages of dynamic allocation of users are that the requirement for persistent storage of allocation data is loosened, and that it is easier to change and upgrade the network architecture, e.g. by introducing a new application server.

Said request may be a Session Initiation Protocol request or a request according to any other protocol (e.g. Ut interface) destined for an application server of the user.

Preferably, said step of querying a database to determine whether or not the user is allocated to an application server is carried out in accordance with the Session Initiation Protocol.

In one embodiment of the invention, said IP Multimedia Subsystem entity is a Serving Call Session Control Function. In this case, the query and response to the query are sent to the Home Subscriber Server over the Cx interface.

In an alternative embodiment, said IP Multimedia Subsystem entity is a front end distributor or a "representative" application server which acts as a single logical application server to the rest of the network. For requests received from the user at a Serving Call Session Control Function of the IP Multimedia Subsystem, the Front-End distributor is located between the application servers and the Serving Call Session Control Function, on the ISC interface. Upon receipt of the request at the Serving Call Session Control Function, the Serving Call Session Control Function queries a Home Subscriber Server in order to identify the Front-End distributor to which the request should be sent. The query may return to the Serving Call Session Control Function an identification of a single Front-End distributor, or may identify a group of Front End distributors from which one Front-End distributor is selected.

Alternatively, the Front-End distributor may receive requests from the user over the Ut interface.

The Front-End distributor may be a standalone node within the IP Multimedia Subsystem. Alternatively, it may be a functional entity residing on an application server. In the latter case, the Front-End distributor may forward a request to the application server on which it resides, or to another application server depending upon the application server to which the user is allocated.

Said database may be provided at a Home Subscriber Server. Allocation of users to application servers may be stored in the Home Subscriber Server using the transparent and/or non-transparent ISC interface. Other, alternative centrally maintained databases may include LDAP directories and relational/object databases available over interfaces such as SQL, JDBC, ODBC. It is also possible for the database to be maintained at a plurality of locations within the network. For example, in the case where the entity performing the application server allocations is an FE-DIST, a copy of the database may be provided at each FE-DIST.

Preferably, said request sent from the application server or said entity to said database includes one or more addresses of the application server. An address may be included for each interface to which the application server is connected.

In the event that the user has not previously been allocated to an application server, the application server will obtain subscriber data from the Home Subscriber Server. For previously allocated users, the application server may have retained the subscriber data. Subscriber data may be retained by the application server regardless of whether or not the user has been de-registered/unregistered from the IP Multimedia Subsystem.

In some implementations of the invention, an application server receiving a request from said entity may forward the request to a further application server and/or may cause the allocation of the user to that other server to be recorded at said database.

According to a second aspect of the present invention there is provided apparatus comprising:
means for receiving a request associated with an IP Multimedia Subsystem user;
characterised by
means for querying a centrally maintained database to determine whether or not the user is allocated to an application server;
if it is determined that the user is not allocated to an application server, means for allocating the user to an application server, and for forwarding the request to the allocated application server; and
if it is determined that the user is allocated to an application server,
means for forwarding the request to the allocated application server.

Said apparatus may be provided within a Serving Call Session Control Function server. Alternatively, the apparatus may reside at an application server or may be a standalone node within the IP Multimedia Subsystem.

### Brief Description of the Drawings

Figure 1 illustrates schematically the integration of an IP Multimedia Subsystem into a 3G mobile communications system;
Figure 2 illustrates schematically certain entities of the IP Multimedia Subsystem including an Application Server and a Serving Call/State Control Function together with the various interfaces;
Figure 3 illustrates schematically the use of a FE-DIST to allocate IMS users to application servers at IMS user registration;
Figure 4 illustrates schematically the use of a FE-DIST to handle originating and terminating calls after user registration;
Figure 5 illustrates schematically the use of a FE-DIST to handle terminating calls to an unregistered user;
Figure 6 illustrates schematically the use of a FE-DIST to handle requests received over a non-SIP interface for an IMS registered user;
Figure 7 illustrates schematically the use of a FE-DIST to handle requests received over a non-SIP interface for an unregistered user;
Figure 8 illustrates signalling associated with building an application server database a representative application server;
Figure 9 illustrates signalling and process steps associated with the use of a representative application server to select an application server and cause message redirection to the selected server;
Figure 10 illustrates signalling and process steps associated with the use of a representative application server in the case of a received INVITE where an already assigned application server is active; and
Figure 11 illustrates signalling and process steps associated with the use of a representative application server in the case of a received INVITE where an already assigned application server is inactive.

### Detailed Description of Certain Embodiments

The 3GPP Technical Standards referenced above describe the use of initial filter criteria (IFC), which are stored in the HSS, and which are sent to a Serving Call/Session Control Function (S-CSCF) node either upon registration of a subscriber or when a terminating call is made to an unregistered subscriber. Conventionally, an IFC for a subscriber contains a specific SIP Application Server (AS) address, e.g. as a Fully Qualified Domain Name (FQDN). This identifies the AS that is allocated to that subscriber for a given service. [It is possible for an IFC to contain two or more AS addresses corresponding to respective IMS services.] If the AS address in the IFC is a SIP-URL, a DNS is used to resolve the SIP-URL to an IP address. The S-CSCF may cache the association between the specific SIP-AS address and the IP address for reasons of efficiency. This caching is typically in the DNS client of the S-CSCF of the system and is cached on a per-node basis, not on a per subscriber basis.

The following discussion assumes, by way of example, that a flexible and dynamic approach to SIP-AS allocation is used. This involves replacing the specific AS address stored in the Initial Filter Criteria (IFC) at the Home Subscriber Server (HSS) with a generic AS identity, e.g. SIP-AS-service.operator.com, in the event that a dynamic SIP-AS allocation has not already been completed. Rather than directly identifying one or a group of ASs, this identity identifies a new functional entity within the IMS, referred to here as a Front End Distributor, or "FE-DIST". The FE-DIST may alternatively be known as a "representative AS". The FE-DIST sits between the S-CSCF and the ASs on the ISC interface. At registration of a subscriber - or upon call termination for an unregistered subscriber - the IFC is downloaded to the S-CSCF across the Cx interface in accordance with the procedures described in 3GPP TS 23.228; 3GPP TS 29.228 and 3GPP TS 29.229. The generic identity of the SIP-AS is resolved to either a specific name, e.g. FE-DIST.operator.com, which is further resolved to an IP address, or the generic identity is resolved directly to an IP address. Existing DNS methods are used for the resolution process. [In the case where the generic identity is resolved to a specific name which is further resolved to an IP address, two round trips between the S-CSCF and the DNS are required.] The IFC triggers the provision of a third party registration message, i.e. a SIP REGISTER message, by the S-CSCF to the FE-DIST function. The S-CSCF does not cache the association between the subscriber and the selected FE-DIST address at this stage.

The FE-DIST functionality may be a functional entity that resides on every SIP-AS that offers the (required) service, or may be deployed as a standalone node. It is of course possible to combine these two approaches when a service is deployed and installed in a network, i.e. equip certain ASs with FE-DIST functional entities that co-exist with standalone FE-DIST nodes. The Figures referred to below and which are used to explain the proposal show the FE-DIST and the ASs (on which the Application Logic resides) as separate functional entities.

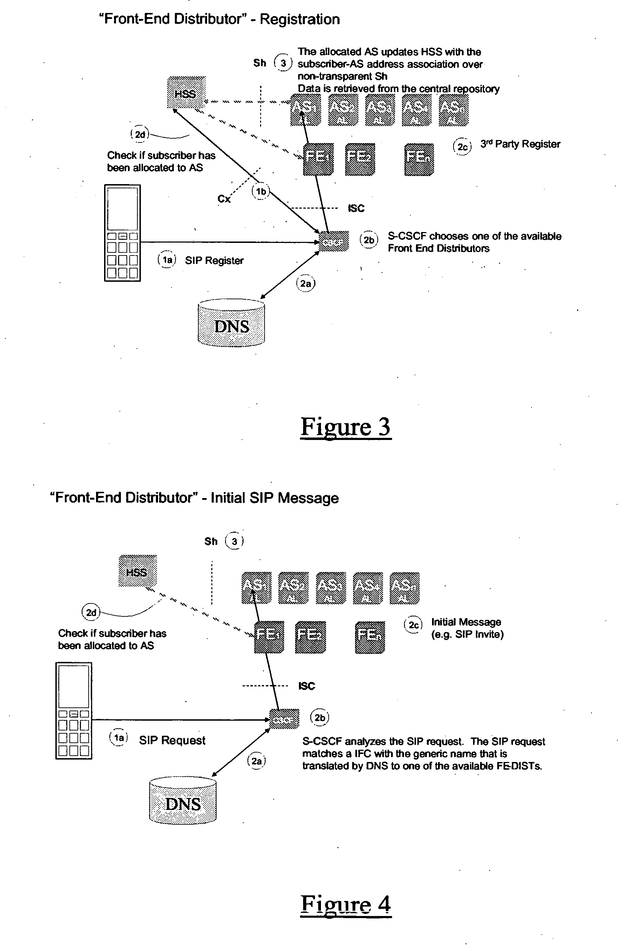

Figure 3 illustrates schematically functional entities within an IP Multimedia Subsystem (IMS) which facilitate the provision of services to a subscriber terminal. Figure 3 also illustrates, by way of example, procedural steps associated with the dynamic allocation of subscribers to IMS Application Servers (AS₁ to ASₙ) enabled by Front End Distribution entities (FE₁ to FEₙ). It is assumed here that application server allocation occurs at registration, but this may happen at other times.
- 1a: The subscriber terminal initiates a REGISTRATION process by sending a SIP REGISTER message to the IMS network and is allocated to one of the S-CSCFs according to 3GPP defined procedures.
- 1b: During the registration process, the service profile for the subscriber is downloaded from the HSS. This profile contains the IFC.
- 2a: After completing the registration process, the S-CSCF understands that it should send a third party REGISTRATION to the application server name identified in the IFC. The application server name is a generic name. The S-CSCF requests the IP address from a DNS server. The DNS server responds back with the address of one or a number of available FE-DISTs. Note that the S-CSCF interprets the address as an AS address and no change to the functionality of the S-CSCF is required.
- 2b: The S-CSCF selects one of the returned IP addresses as the address to forward the REGISTER message to.
- 2c: The third party REGISTER message is sent to the selected FE-DIST.
- 2d: The FE-DIST checks if the subscriber has already been allocated to an AS by querying a central database stored at the HSS over the Sh interface. If so, the REGISTER message is forwarded to the allocated AS. If the look up operation indicates that the subscriber is not yet allocated to an AS, the FE-DIST chooses an AS and sends the REGISTER message to the chosen AS.
- 3: Upon receiving the third party registration, the AS performs the following tasks:
It stores a mapping between its address and the subscriber identity in the HSS. The Address that the AS stores is in fact an array of different address for the different interfaces. For example, there may be different address for the reception of SIP messages, HTTP traffic etc.
It retrieves the subscriber data from the central location (e.g. HSS or other central repository). The AS subscribes to the central location so that it will be informed of changes to the subscriber data.

In the short term, the SIP-AS may store the mapping between its address and the subscriber identity in the HSS using transparent data (over the Sh interface: transparent data is not understood by the HSS). In the long term, the mapping may be added to the non-transparent data in the HSS.

It will be appreciated that, rather than store the database referred to at step 2b at a single location, i.e. the HSS, multiple copies may be stored at various locations within the network. For example, each FE-DIST may store its own copy of the database.

Upon completion of the process illustrated in Figure 3, a SIP-AS has been allocated to the subscriber, and the SIP-AS has retrieved a copy of the required subscriber data and is ready to serve the subscriber

Upon de-registration of a subscriber to the IMS, the subscriber can remain allocated to the SIP-AS and the subscriber data maintained by the FE-DIST/AS/HSS does not have to be cleared. This allows a clear separation of the subscriber/AS allocation procedure from the IMS/SIP Registration procedure, providing the advantage that subscriber data retrieval frequency is lowered as compared to when the allocation procedure is coupled to the SIP/IMS registration procedure.

With reference to Figure 4, the procedure for handling originating and terminating IMS "calls" for an already registered subscriber will now be described, making reference to the process steps numbered in the Figure.
- 1a: A SIP request (e.g. SIP INVITE) relating to the user is received by the S-CSCF.
- 2a: The S-CSCF analyses the initial SIP request, and the S-CSCF requests the IP address, based upon the SIP-AS name received from the HSS over the Cx interface, from a DNS server. The DNS server responds back with one or a number of addresses to available FE-DISTs. Note that the S-CSCF interprets the address as an AS address and the functionality of the S-CSCF is unchanged.
- 2b: If necessary, the S-CSCF selects one of the returned addresses which will point to a FE-DIST
- 2c: The initial SIP message is sent to the provided or selected FE-DIST address.
- 2d: The receiving FE-DIST identifies the AS allocated to the subscriber by performing a look up in the HSS over the transparent Sh (or by inspecting its own copy of the database if this is provided).
- 3: The SIP request is sent to the SIP-AS. The SIP-AS has a copy of the data for the subscriber from the (previously carried out) registration process. It proceeds to process the SIP request.

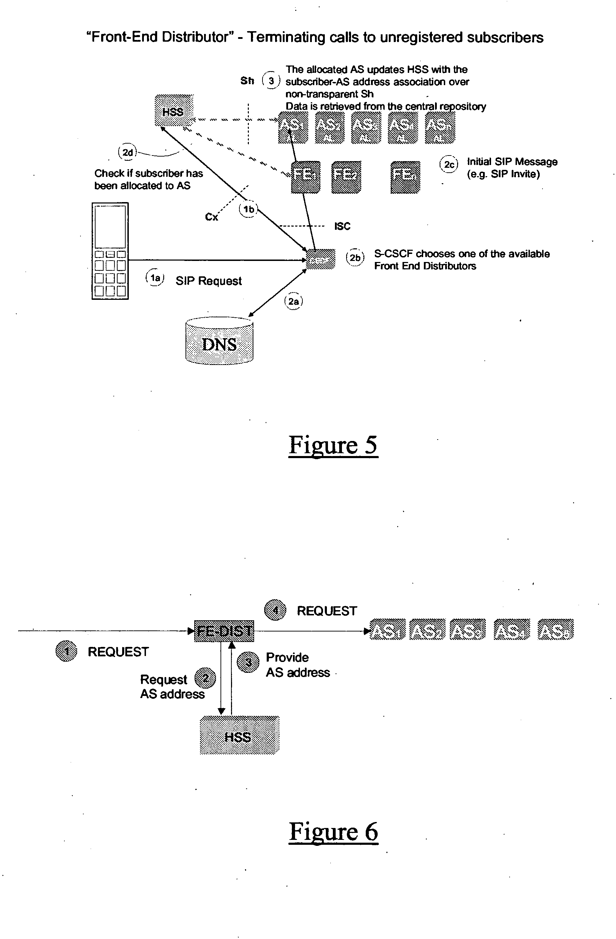

With reference to Figure 5, the procedure for handling terminating IMS "calls" for an unregistered subscriber will now be described, making reference to the process steps numbered in the Figure.
- 1a: The S-CSCF receives a terminating SIP request (e.g. SIP INVITE).
- 1 b: The service profile is downloaded to the S-CSCF from the HSS. This contains the initial filter criteria.
- 2a: The S-CSCF analyses the initial SIP request, and the S-CSCF requests the IP address from a DNS server (based upon the SIP-AS name received from the HSS over the Cx interface). The DNS server responds to the S-CSCF with one or a number of addresses to available FE-DISTs.
- 2b: If necessary, the S-CSCF selects one of the returned addresses to forward the initial SIP message to.
- 2c: The initial SIP message is sent to the selected FE-DIST.
- 2d: The FE-DIST identifies the AS allocated to the subscriber by performing a look up in the HSS over the transparent Sh.
- 3: The SIP request is sent to the SIP-AS. Assuming that the subscriber has remained allocated to the SIP-AS, even though the subscriber was IMS de-registered/un-registered, the SIP-AS will have a copy of the data for the subscriber from the previous registration process. It proceeds to process the SIP request. [If the AS has lost the subscriber data for some reason. this would have been discovered in step 2d. A new AS would have been allocated, and the chosen AS would have fetched the subscriber data from the central location.]

The procedure proposed here for allocating and routing SIP requests may also be applied in the case where requests arrive at the IP Multimedia Subsystem over the Ut interface.

Figure 6 illustrates the case where a SIP request is received over the Ut Interface and the user in question has already been allocated to an AS. The illustrated and numbered steps are as follows:
1. A request is received within the IMS over the Ut interface. The request is terminated on a FE-DIST for the service represented by that front end.
2. The FE-DIST requests the AS address from the HSS over the Sh interface.
3. The explicit AS address is returned over the Sh interface to the FE-DIST.
4. The Request is forwarded to the explicit address and, for example, an XML Document Management Server (XDMS) on the serving AS.

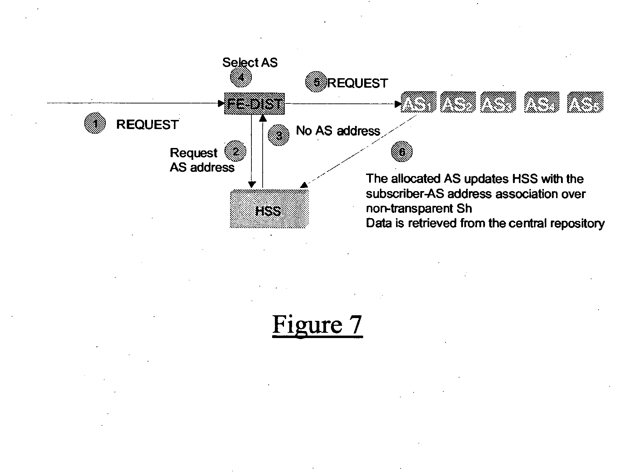

Figure 7 illustrates the case where a SIP request is received over the Ut Interface and the user in question has not already been allocated to an AS. The illustrated and numbered steps are as follows:
1. A request is received over the particular interface. The request is terminated on a FE-DIST for the service represented by that front end.
2. The FE-DIST requests the AS address from the HSS over the Sh interface.
3. An indication that no AS has been allocated is returned.
4. The FE-DIST selects an AS (it may use other databases to obtain the names of valid ASs).
5. The request is forwarded to the selected AS and the XMDS.
6. The selected AS performs the following:
   - The SIP-AS may choose to register itself as the serving AS for the subscriber and if it does it will store its explicit address in the HSS. [This may not be required if the transaction is to occur only once and it is not expected that there will be subsequent requests.]
   - Read the application specific subscriber data from the central data storage (typically the HSS).
   - Process the request.

Whilst Figures 6 and 7 are concerned specifically with the Ut interface, it will be appreciated that the FE-DIST may handle requests received over other interfaces. Whilst other interfaces have yet to be standardised, an example might be where an application server implements both ISC and OSA, and the Parlay protocol is used in OSA.

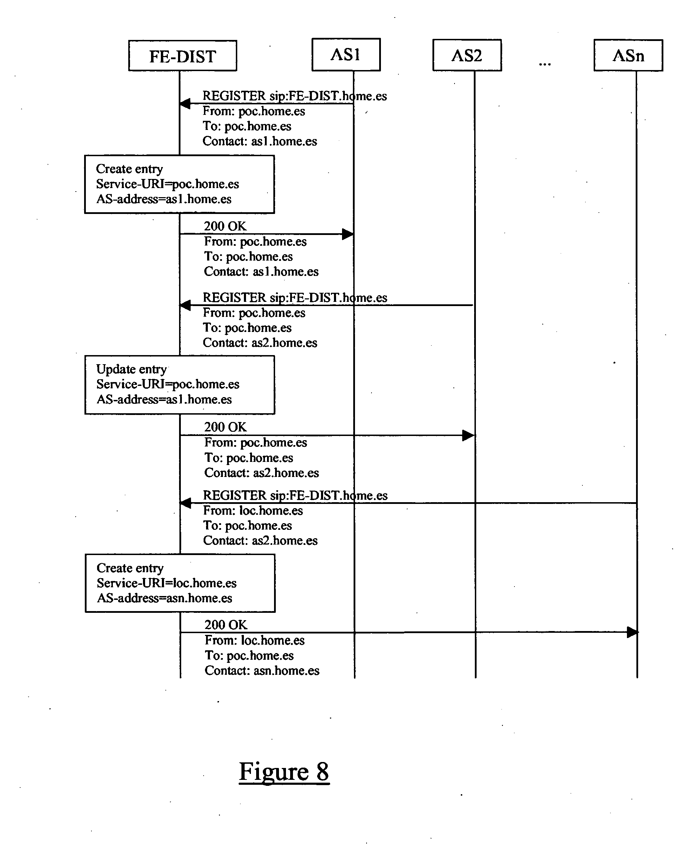

An alternative mechanism for facilitating the dynamic allocation of users to application servers involves implementing a FE-DIST which is able to allocate users to some service related application server and cause SIP requests to be redirected to that application server. This new FE-DIST acts essentially as an application server working in re-direct mode, and must know beforehand the names or addresses of all the ASs that are going to share the load of users. Hence the FE-DIST must contain a table with the addresses of ASs to which users can be assigned dynamically. The list of AS names or addresses may be set in the FE-DIST in two different ways:
1. Manually configured (by means of an operations and maintenance tool, a command-line interface or any other means).
2. Automatically by the ASs themselves. In this approach, when an AS is brought on-line, it will send a SIP REGISTER message to the FE-DIST with the SIP URI of the AS in the From and To headers and a Contact header holding the name or address of the AS. Figure 8 illustrates the SIP signalling associated with this automatic configuration process.

Note that in any given network there may be ASs to which users can be dynamically allocated and ASs that do not have this capability and to which users must therefore be statically allocated.

Allocation of a user to an AS will be performed when the user accesses the IMS network, e.g. when he or she registers in the network. When this happens, the S-CSCF receives a SIP REGISTER message. Based on trigger information (IFCs) downloaded from the HSS, the S-CSCF forwards the REGISTER message to the FE-DIST. This procedure is well known and defined in IMS standards. Now, the FE-DIST needs to assign one AS to the registering user. It checks its pre-configured list of ASs and, based on some criteria, it selects an AS and returns its name or address as a Contact header in a "300 Multiple Choices" answer to the S-CSCF. The FE-DIST takes note of the identity and/or address of the selected AS and stores this together with the user identifier received in the REGISTER request in its table of user identifier-AS mappings. An AS can be selected for example based upon its current occupancy level, its use level (in case that the FE-DIST receives load reports from ASs), its state of operation (in case that the FE-DIST is able to obtain information about the working status of ASs).

The S-CSCF, on reception of the FE-DIST answer, forwards the REGISTER request (slightly modified as a 3^{rd}-party registration) to the AS as instructed by the FE-DIST. Eventually the S-CSCF will receive a "200 OK" response from this or another (in case some other redirection takes place) AS, and it will forward the response back to the previous hop in the path of the REGISTER request (normally some I-CSCF).

For further SIP requests related to the now registered user, the S-CSCF forwards each new request to the FE-DIST after matching it against its trigger information, as it did with the REGISTER request before. This however poses the problem that each and every new SIP request has to be resolved via the FE-DIST, worsening the response time of the overall network and increasing the load on the S-CSCF and FE-DIST functions.

A possibly improved approach is for the FE-DIST to answers to the REGISTER with a "301 Moved Permanently" response when it finds out that the user identified in the REGISTER has already been allocated to an AS. This enables the S-CSCF to cache the AS address included in the response so that no further related SIP requests are sent to the FE-DIST.

Another approach is for the FE-DIST to answer to the REGISTER with a "302 Moved Temporarily" response including an Expires header with a pre-defined time. This allows the S-CSCF to cache the AS address for that pre-defined time. When this time expires, the S-CSCF will query the FE-DIST on reception of a further SIP request for the user. The advantage of this approach is that it will reduce the load on the FE-DIST whilst still allowing re-allocation of the user to a new subscriber, for example if a previously allocated AS fails.

One simple way to install the redirection reported by the FE-DIST (in the "300 Multiple Choices" or "302 Moved Temporarily") in S-CSCF is to overwrite the destination AS field in the trigger information of the trigger that fired the forwarding of the request to the FE-DIST. Note that in the "302 Moved Temporarily" case, the S-CSCF must retain the old destination server for the trigger so that it may recover it when the time set by the 302 answer expires.

In the cases where the FE-DIST implements a redirection in the S-CSCF, when the HSS subsequently updates the trigger information stored in S-CSCF for a user, any temporary or permanent redirection installed in the S-CSCF for that user must be removed. If the redirection has been installed by overwriting the trigger information, this will of course happen automatically when storing the new trigger information sent by HSS.

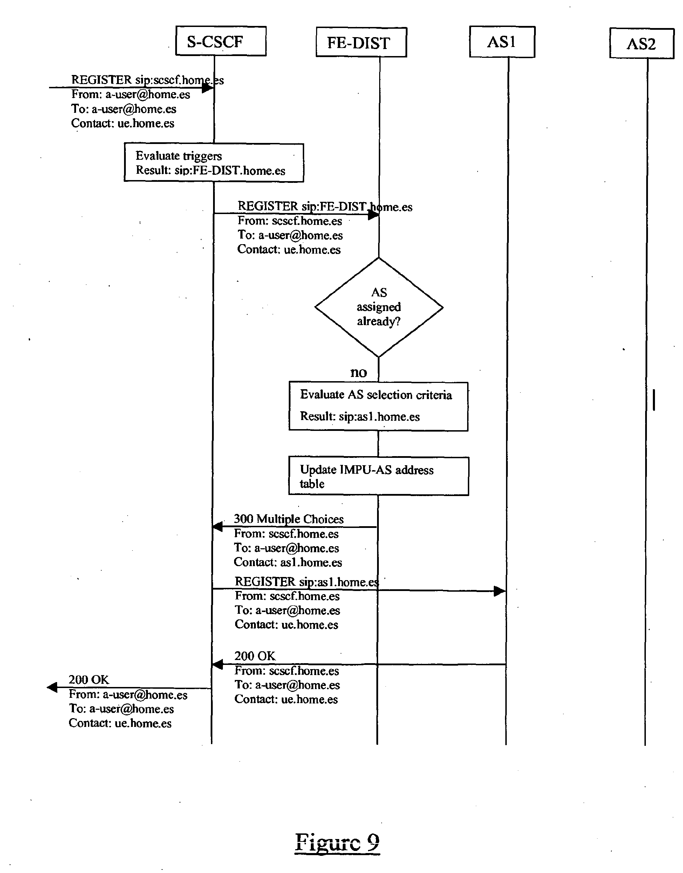

Figure 9 illustrates how the FE-DIST handles an initial SIP request from a user.
The request may be a REGISTER as illustrated, or some other request for which the FE-DIST does not have registered any user id-AS binding.

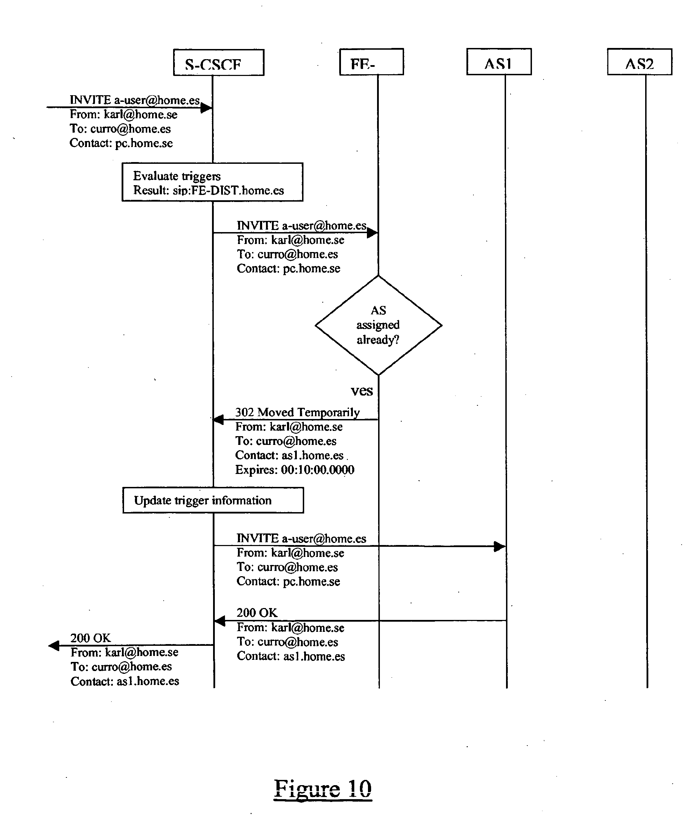

Figure 10 illustrates how a further SIP request for an already registered user is handled by the FE-DIST, assuming use of the "302 Moved Temporarily" response.

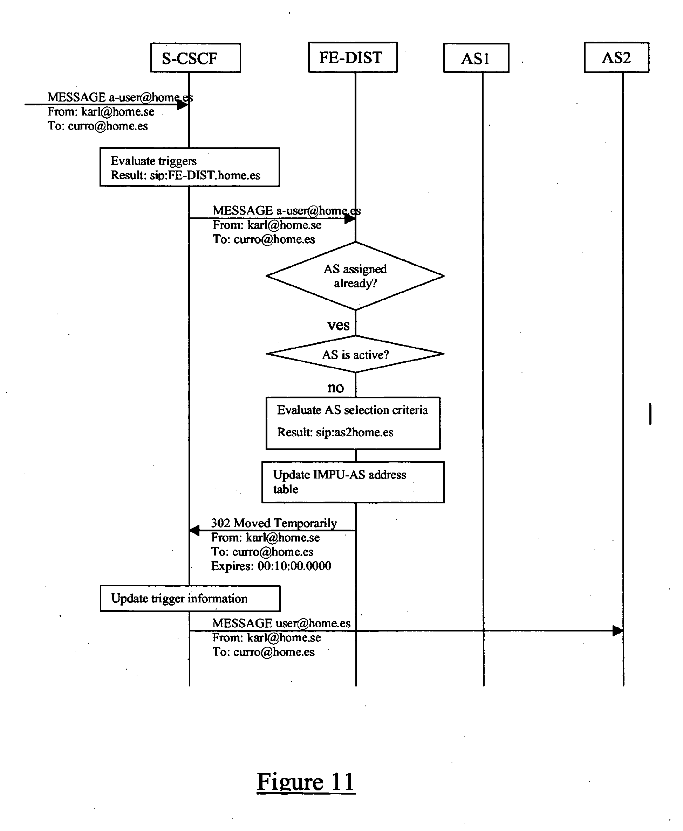

Figure 11 illustrates a procedure for handling re-location of a user from a non-working AS to another AS. Note that if the service being provided by the new AS requires registration (i.e. a REGISTER request must have been received prior to using the service), the approach presented will only work as long as the new AS is able to access the pre-existing registration information in some way (e.g. if all the ASs share a common registrations database that keeps working even if individual ASs fail).

It will be appreciated by the person of skill in the art that various modifications may be made to the above described embodiments without departing from the scope of the present invention.

## Claims

1. A method of directing requests to an application server within an IP Multimedia Subsystem, the method being **characterised by** the steps of:
upon receipt of a request associated with an IP Multimedia Subsystem user at an entity of the IP Multimedia Subsystem, querying a centrally maintained database to determine whether or not the user is allocated to an application server;
if it is determined that the user is not allocated to an application server, allocating the user to an application server at said entity, forwarding the request from said entity to the allocated application server, and sending a request from the application server or said entity to said centrally maintained database to cause the allocation to be recorded there; and
if it is determined that the user is allocated to an application server, forwarding the request from said entity to the allocated application server.

2. A method according to claim 1, said step of querying a centrally maintained database to determine whether or not the user is allocated to an application server being carried out in accordance with the Session Initiation Protocol.

3. A method according to claim 1 or 2, said IP Multimedia Subsystem entity being a Serving Call Session Control Function.

4. A method according to claim 1 or 2, wherein said IP Multimedia Subsystem entity is a Front-End distributor which acts as a single logical application server to the rest of the network.

5. A method according to claim 4 comprising, upon receipt of the request at a Serving Call Session Control Function, sending a query from the Serving Call Session Control Function to a Home Subscriber Server in order to identify the Front-End distributor to which the request should be sent, and receiving at the Front-End distributor an identification of that Front-End distributor.

6. A method according to any one of the preceding claims, wherein said request is a Session Initiation Protocol request.

7. A method according to claim 4 or 5, wherein said request is received at said entity over a Ut interface.

8. A method according to any one of the preceding claims, wherein said centrally maintained database is provided at a Home Subscriber Server.

9. A method according to claim 8, wherein the allocation of users to application servers is stored in the Home Subscriber Server using the transparent and/or non-transparent ISC interface.

10. A method according to claim 4 or to any one of claims 5 to 9 when appended to claim 4, wherein said centrally maintained database is provided at the Front-End distributor.

11. A method according to claim 4 or to any one of claims 5 to 9 when appended to claim 4, wherein the Front End distributor caches received application server allocation data and subscribes to changes of this data.

12. A method according to any one of the preceding claims, wherein said request sent from the application server to said centrally maintained database includes one or more addresses of the application server.

13. A method according to any one of the preceding claims, wherein, in the event that the user has not previously been allocated to an application server, the application server obtains subscriber data from the Home Subscriber Server.

14. A method according to claim 13, wherein, for previously allocated users, the application server retains the subscriber data regardless of whether or not the user has been de-registered/unregistered from the IP Multimedia Subsystem.

15. Apparatus for use in an IP Multimedia Subsystem network, the apparatus comprising:
means for receiving a request associated with an IP Multimedia Subsystem user;
**characterised by**
means for querying a centrally maintained database to determine whether or not the user is allocated to an application server;
if it is determined that the user is not allocated to an application server, means for allocating the user to an application server, and for forwarding the request to the allocated application server; and
if it is determined that the user is allocated to an application server, means for forwarding the request to the allocated application server.

16. Apparatus according to claim 15, the apparatus forming part of a Serving Call Session Control Function server.

17. Apparatus according to claim 15, the apparatus residing at an application server or being a standalone node within the IP Multimedia Subsystem.

## Patentansprüche

1. Verfahren zum Richten von Anfragen an einen Application-Server innerhalb eines IP-Multimedia-Subsystems, wobei das Verfahren durch die Schritte **gekennzeichnet** ist:
beim Erhalt einer Anfrage, welche einem IP-Multimedia-Subsystem-Benutzer zugeordnet ist, an einer Entität des IP-Multimedia-Subsystems, Abfragen einer zentral verwalteten Datenbank, um zu bestimmen, ob der Benutzer einem Application-Server zugewiesen ist;
falls bestimmt wird, dass der Benutzer nicht einem Application-Server zugewiesen ist, Zuweisen des Benutzers zu einem Application-Server an der Entität, Weiterleiten der Anfrage von der Entität an den zugewiesenen Application-Server, und Senden einer Anfrage von dem Application-Server oder der Entität an die zentral verwaltete Datenbank, um zu bewirken, dass die Zuweisung dort aufgezeichnet wird; und
falls bestimmt wird, dass der Benutzer einem Application-Server zugewiesen ist, Weiterleiten der Anfrage von der Entität an den zugewiesenen Application-Server.

2. Verfahren nach Anspruch 1, wobei der Schritt des Abfragens einer zentral verwalteten Datenbank, um zu bestimmen, ob der Benutzer einem Application-Server zugewiesen ist, gemäß dem Session-Initiation-Protokoll ausgeführt wird.

3. Verfahren nach Anspruch 1 oder 2, wobei die IP-Multimedia-Subsystem-Entität eine Serving Call Session Control Function ist.

4. Verfahren nach Anspruch 1 oder 2, wobei die IP-Multimedia-Subsystem-Entität ein Front-End-Verteiler ist, welcher als ein einzelner logischer Application-Server für das restliche Netzwerk fungiert.

5. Verfahren nach Anspruch 4, welches beim Erhalt der Anfrage an einer Serving Call Session Control Function, Senden einer Anfrage von der Serving Call Session Control Function an einen Home-Subscriber-Server, um den Front-End-Verteiler, an welchen die Anfrage gesendet werden sollte, zu identifizieren, und Empfangen an dem Front-End-Verteiler einer Identifikation des Front-End-Verteilers umfasst.

6. Verfahren nach einem der vorangehenden Ansprüche, wobei die Anfrage eine Session-Initiation-Protokoll-Anfrage ist.

7. Verfahren nach Anspruch 4 oder 5, wobei die Anfrage an der Entität über eine Ut-Schnittstelle empfangen wird.

8. Verfahren nach einem der vorangehenden Ansprüche, wobei die zentral verwaltete Datenbank an einem Home-Subscriber-Server bereitgestellt wird.

9. Verfahren nach Anspruch 8, wobei die Zuweisung von Benutzern an Application-Server in dem Home-Subscriber-Server unter Nutzung der transparenten und/oder nichttransparenten ISC-Schnittstelle gespeichert wird.

10. Verfahren nach Anspruch 4 oder einem der Ansprüche 5 bis 9, wenn diese an Anspruch 4 angefügt werden, wobei die zentral verwaltete Datenbank an dem Front-End-Verteiler bereitgestellt wird.

11. Verfahren nach Anspruch 4 oder einem der Ansprüche 5 bis 9, wenn diese an Anspruch 4 angefügt werden, wobei der Front-End-Verteiler empfangene Application-Server-Zuweisungsdaten zwischenspeichert und Änderungen dieser Daten abonniert.

12. Verfahren nach einem der vorangehenden Ansprüche, wobei die Anfrage, welche von dem Application-Server an die zentral verwaltete Datenbank gesendet wird, eine oder mehr Adressen des Application-Servers beinhaltet.

13. Verfahren nach einem der vorangehenden Ansprüche, wobei, für den Fall, dass der Benutzer zuvor nicht einem Application-Server zugewiesen wurde, der Application-Server Abonnentendaten von dem Home-Subscriber-Server erhält.

14. Verfahren nach Anspruch 13, wobei, für zuvor zugewiesene Benutzer, der Application-Server die Abonnentendaten behält, unabhängig davon, ob der Benutzer von dem IP-Multimedia-Subsystem abgemeldet wurde.

15. Gerät zur Nutzung in einem IP-Multimedia-Subsystem-Netzwerk, wobei das Gerät umfasst:
Mittel zum Empfangen einer Anfrage, welche einem IP-Multimedia-Subsystem-Benutzer zugeordnet ist;
**gekennzeichnet durch**
Mittel zum Abfragen einer zentral verwalteten Datenbank, um zu bestimmen, ob der Benutzer einem Application-Server zugewiesen ist;
falls bestimmt wird, dass der Benutzer nicht einem Application-Server zugewiesen ist, Mittel zum Zuweisen des Benutzers zu einem Application-Server, und zum Weiterleiten der Anfrage an den zugewiesenen Application-Server; und
falls bestimmt wird, dass der Benutzer einem Application-Server zugewiesen ist, Mittel zum Weiterleiten der Anfrage an den zugewiesenen Application-Server.

16. Gerät nach Anspruch 15, wobei das Gerät Teil eines Serving-Call-Session-Control-Function-Servers bildet.

17. Gerät nach Anspruch 15, wobei sich das Gerät bei einem Application-Server befindet oder ein selbständiger Knoten innerhalb des IP-Multimedia-Subsystems ist.

## Revendications

1. Procédé pour diriger des requêtes vers un serveur d'application dans un Sous-système Multimédia IP, le procédé étant **caractérisé par** les étapes qui consistent à :
à réception d'une requête associée à un utilisateur du Sous-système Multimédia IP au niveau d'une entité du Sous-système Multimédia IP, interroger une base de données maintenue de manière centralisée pour déterminer si l'utilisateur est attribué à un serveur d'application ou non ;
si on détermine que l'utilisateur n'est pas attribué à un serveur d'application, affecter l'utilisateur à un serveur d'application au niveau de ladite entité, acheminer la requête de ladite entité au serveur d'application attribué, et envoyer une requête du serveur d'application ou de ladite entité à ladite base de données maintenue de manière centralisée pour amener l'attribution à y être enregistrée ; et
si on détermine que l'utilisateur est attribué à un serveur d'application, acheminer la requête de ladite entité au serveur d'application attribué.

2. Procédé selon la revendication 1, ladite étape d'interrogation d'une base de données maintenue de manière centralisée pour déterminer si l'utilisateur est attribué à un serveur d'application ou non, étant exécutée conformément au Protocole d'Ouverture de Session.

3. Procédé selon la revendication 1 ou 2, dans lequel ladite entité de Sous-système Multimédia IP étant une Fonction de Commande de Session d'Appel de Service.

4. Procédé selon la revendication 1 ou 2, dans lequel ladite entité de Sous-système Multimédia IP est un distributeur Frontal qui agit en tant que simple serveur d'application logique par rapport au reste du réseau.

5. Procédé selon la revendication 4, comprenant le fait de, à réception de la requête au niveau d'une Fonction de Commande de Session d'Appel de Service, envoyer une interrogation de la Fonction de Commande de Session d'Appel de Service à un Serveur d'Abonnés Résidentiels afin d'identifier le distributeur Frontal auquel la requête devrait être envoyée, et recevoir au niveau du distributeur Frontal une identification de ce distributeur Frontal.

6. Procédé selon l'une quelconque des revendications précédentes, dans lequel ladite requête est une requête de Protocole d'Ouverture de Session.

7. Procédé selon la revendication 4 ou 5, dans lequel ladite requête est reçue au niveau de ladite entité sur une interface Ut.

8. Procédé selon l'une quelconque des revendications précédentes, dans lequel ladite base de données maintenue de manière centralisée est pourvue au niveau d'un serveur d'Abonnés Résidentiels.

9. Procédé selon la revendication 8, dans lequel l'attribution d'utilisateurs à des serveurs d'application est stockée dans le serveur d'Abonnés Résidentiels en utilisant l'interface ISC transparente et/ou non transparente.

10. Procédé selon la revendication 4 ou selon l'une quelconque des revendications 5 à 9, lorsqu'elle se rattache à la revendication 4, dans lequel ladite base de données maintenue de manière centralisée est pourvue au niveau du distributeur Frontal.

11. Procédé selon la revendication 4 ou selon l'une quelconque des revendications 5 à 9, lorsqu'elle se rattache à la revendication 4, dans lequel le distributeur Frontal met en mémoire cache des données d'attribution au serveur d'application reçues et s'inscrit à des changements de ces données.

12. Procédé selon l'une quelconque des revendications précédentes, dans lequel ladite requête envoyée du serveur d'application à ladite base de données maintenue de manière centralisée comporte une ou plusieurs adresses du serveur d'application.

13. Procédé selon l'une quelconque des revendications précédentes, dans lequel, dans le cas où l'utilisateur n'a pas été précédemment attribué à un serveur d'application, le serveur d'application obtient des données d'abonné du Serveur d'Abonnés Résidentiels.

14. Procédé selon la revendication 13, dans lequel, pour des utilisateurs précédemment attribués, le serveur d'application retient les données d'abonné indépendamment du fait que l'utilisateur a été désinscrit/non inscrit du sous-système multimédia IP ou non.

15. Appareil à utiliser dans un réseau de Sous-système Multimédia IP, l'appareil comprenant :
un moyen destiné à recevoir une requête associée à un utilisateur de Sous-système Multimédia IP;
**caractérisé par**
un moyen destiné à interroger une base de données maintenue de manière centralisée afin de déterminer si l'utilisateur est attribué à un serveur d'application ou non;
si on détermine que l'utilisateur n'est pas attribué à un serveur d'application, un moyen destiné à attribuer l'utilisateur à un serveur d'application et à acheminer la requête au serveur d'application attribué ; et
si on détermine que l'utilisateur est attribué à un serveur d'application, un moyen destiné à acheminer la requête au serveur d'application attribué.

16. Appareil selon la revendication 15, l'appareil formant partie d'un serveur de Fonction de Commande de Session d'Appel de Service.

17. Appareil selon la revendication 15, l'appareil se trouvant au niveau d'un serveur d'application ou étant un noeud autonome dans le Sous-système Multimédia IP.
